**Europäisches Patentamt**

**European Patent Office**

**Office européen des brevets**

(19)

(11) Publication number : **0 327 279 B1**

## (12) EUROPEAN PATENT SPECIFICATION

(45) Date of publication of patent specification :
**17.06.92 Bulletin 92/25**

(21) Application number : **89300854.0**

(22) Date of filing : **27.01.89**

(51) Int. Cl.$^5$ : **B01D 53/18,** F28F 25/08, B05D 1/34, B05D 1/10, C23C 4/04, C23C 4/18

(54) **Liquid-vapour contact column.**

(30) Priority : **05.02.88 GB 8802627**

(43) Date of publication of application :
**09.08.89 Bulletin 89/32**

(45) Publication of the grant of the patent :
**17.06.92 Bulletin 92/25**

(84) Designated Contracting States :
**BE CH DE FR GB IT LI NL**

(56) References cited :
**EP-A- 0 211 443**
**DE-A- 3 625 659**
**FR-A- 2 338 065**
**FR-A- 2 386 008**
**GB-A- 2 152 079**
**US-A- 3 713 281**

(56) References cited :
**US-A- 3 723 165**
**US-A- 4 138 511**
**PATENT ABSTRACTS OF JAPAN, vol. 9, no. 91 (C-277)[1814], 19th April 1985; & JP-A-59 222 566 (KAWASAKI JUKOGYO K.K.)14-12-1984 IDEM**

(73) Proprietor : **The BOC Group plc**
**Chertsey Road**
**Windlesham Surrey GU20 6HJ (GB)**

(72) Inventor : **Lavin, John Terence**
**25 Boxgrove Road**
**Guildford Surrey (GB)**

(74) Representative : **Wickham, Michael et al**
**c/o Patent and Trademark Department The BOC Group plc Chertsey Road**
**Windlesham Surrey GU20 6HJ (GB)**

## Description

This invention relates to liquid-vapour contact columns.

In a liquid-vapour contact column, for example a distillation column an ascending vapour is intimately contacted with a descending liquid. Members providing surfaces on which such contact can take place are disposed in the column. The members may comprise perforate, spaced, horizontal trays across which liquid flows and through which the ascending vapour passes. The vapour and liquid thus come into contact with one another. Downcomers are used to conduct liquid from the exit end of one tray to the entrance end of the tray below.

An alternative method of contacting liquid and vapour is to use a packing in the columns. Column packings typically have a regular structure with defined flow channels. They have a large active mass exchange surface and give high separation performance with low pressure drop. The packing elements, typically consist of thin corrugated sheets of material such as gauze stacked on top of one another to form open, intersecting channels at an angle to the column axis. As a result, the gas flowing through the packing is mixed in the direction of the parallel elements. By transposing successive elements, radial mixing is induced over the entire column cross-section.

Although structured column packings are widely used in distillation columns operating at above ambient temperature for fractionating liquid mixtures, they are not widely used commercially in separating gas mixtures, eg air, at cryogenic temperatures except on a small scale. In practice, there is a difficulty in limiting the height of the column when for example, air is being distilled. The invention aims at providing a packing for a distillation or other liquid-vapour contact column which is able to ameliorate this difficulty.

According to the present invention there is provided a packing for a liquid-vapour contact column, comprising at least one array of liquid-vapour contact members each defining liquid-vapour contact passages therethrough each having a wettable surface, each member being of metallic sheet and each said wettable surface including a multiplicity of open pores, wherein said surface is formed by spraying a particulate mixture of metal and plastics material onto a surface of the metallic sheet to form a coating comprising particles of plastics embedded in metal on the said surface, and heating the thus formed coating to volatise or otherwise remove the plastics material and thereby form the pores in the coating.

The invention also provides a method of making a packing for a liquid-vapour contact column comprising, spraying a particulate mixture of metal and plastics material onto metallic sheets to form on each sheet at least one coating comprising particles of plastics embedded in metal on the said surface, heating the coating to volatalise or otherwise remove the plastics material and thereby form the pores in the coating, forming liquid vapour contact passages in the sheet, and forming the sheets into an array in the column.

The percentage porosity of the coating depends on the mass ratio of plastics powder to metal powder. The average size of the pores depends largely on the average size of the plastics particles. Accordingly, the invention enables the porosity to be varied independently of the average pore size and thus enables there to be prepared a surface specially tailored to the properties of a gas mixture being separated by distillation at cryogenic temperatures.

Typically, the plastics particles can have an average size in the range 15 to 150 micrometres. Typically, the mass ratio of metal particles to plastic particles in the mixture that is sprayed onto the surface of the substrate has a value in the range of 4:1 to 1:1 so that the coating has a porosity of from 20 to 50%, although if desired more porous coatings may be formed.

The average size of the metal particles is not critical to the invention and may be lower or higher than the average size of the plastics particles. Similarly, the thickness of the coating is not critical to the invention. In our experiments, we have prepared coatings comprising a single porous layer 5, 254 and 381 micrometres (10 and 15 thousands of an inch) in depth, and coatings comprising two such porous layers, one layer having a difference average pore size from the other. The distribution of pore sizes is preferably designed to give optimum liquid hold up and wetting and to result in a minimum HETP (height equivalent to theoretical plate).

The plastic and metal particles may each have a regular or irregular geometry but their flow properties must allow their use in a spray coating process.

Coated sheets for use in making a packing according to the invention typically have surfaces that comprise a network of open, re-entrant pores or cavities having an average size in the range 15 to 150 micrometres (and more typically a size in the range 15 to 50 micrometres). The nature of the coating is such that it provides the finished sheets with excellent wetting properties. Such properties are conducive to good liquid-vapour contact. Moreover, the wetting properties enable the packing to have a relatively low HETP and hence a relatively low pressure drop. Such characteristics are particularly beneficial when separating a mixture of cryogenic fluids of similar volatilities in particular air. Each sheet is preferably formed with alternate crests and troughs so as to define the liquid-vapour contact passages. In addition, the sheets are preferably perforate to enable vapour to pass from each passage to an adjacent one. The sheets are preferably arranged such that in alternate sheets the passages slope in different directions.

The mixture of plastics and metal is preferably sprayed onto the substrate by plasma spraying. Alternatively, flame spraying may be employed. The spraying process may be controlled so as to give the axes of the pores any desired orientation, although typically each pore has an axis perpendicular to the surface of the substrate.

Generally, the mixture comprises separate particles of plastics and metals, although if desired the mixture may comprise composite particles of plastics and metal.

The metal coating may have the same or a different composition from that of the sheets. Typically, the metal comprises aluminium or copper or an alloy based on aluminium or copper. It is possible to select the plastics particles from a wide range of different plastics materials, but in our experiments we have used polyester particles. The sheets are preferably of aluminium or copper.

In the event that the plastics particles are of polyester, a temperature in the range 500 to 550°C is preferably employed to effect volatilisation of the deposited polyester.

The method and apparatus according to the invention will now be described by way of example with reference to the accompanying drawings, in which:

Figure 1 is a schematic perspective view of a structured packing according to the invention.

Figure 2 is a schematic plan view of a fragment of the packing shown in Figure 1.

Figure 3 is a schematic side view of a fragment of the packing shown in Figure 1,

Figure 4 is a schematic section of a fragment of a sheet forming part of the packing shown in Figures 1 to 3.

Figure 5 is a schematic section of a fragment of an alternative sheet that can form part of the packing shown in Figures 1 to 3.

Figure 6 is an electronmicrograph of the surface of a sheet forming part of a packing according to the invention showing the surface at a magnification of 500 times actual size.

Figure 7 is an electronmicrograph similar to Figure 6 but at a magnification of 5000 times actual size.

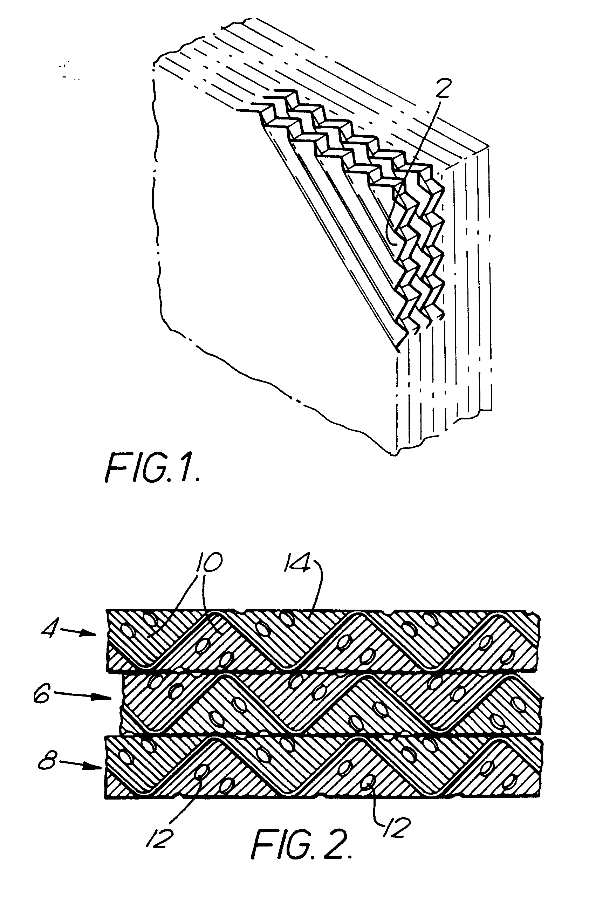

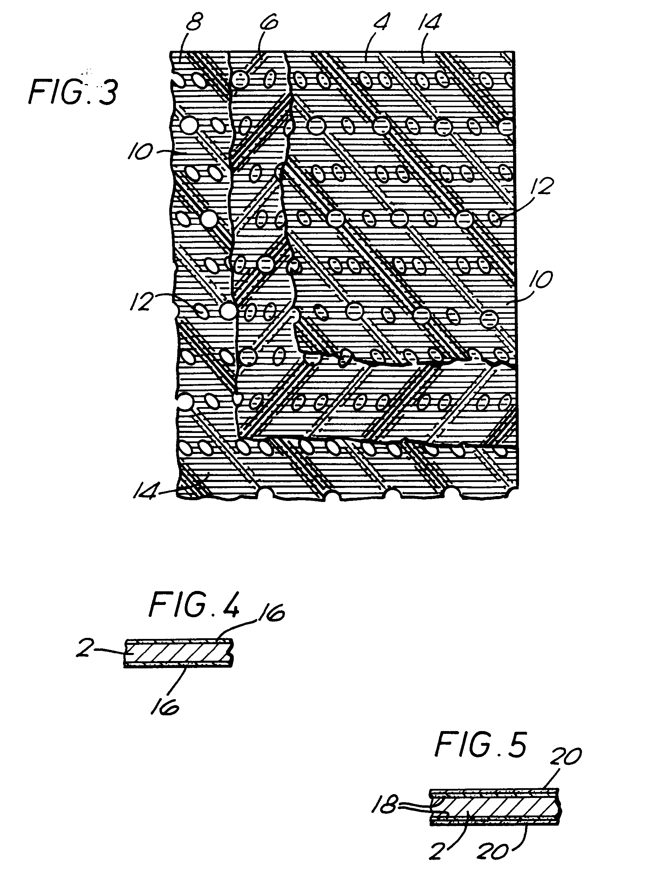

Referring to Figures 1 to 3 of the drawings, a structured packing comprises a multiplicity of vertical sheets 2 of heat conductive metal, usually aluminium or copper. In Figures 2 and 3, just fragments of three adjacent sheets 4, 6 and 8 are shown. Viewed from one side each sheet is provided with alternate peaks and troughs. The surfaces between neighbouring peaks form liquid-vapour contact passages 10. Similarly, viewed from the other side, each sheet is also provided with alternate peaks and troughs and the surfaces bewteen neighbouring peaks also form liquid-vapour contact passages 10. The passages 10 defined by one set of alternate sheets slope from left at the top to right at the bottom, and on the other set of the alternate sheets from right at the top to left at the bottom. The sheets are preferably all identical to one another. The different directions of slope of the passages 10 is obtained by inverting one set of alternate sheets with respect to the other set. The sheets are each formed with perforations 12 which permit liquid and vapour to flow from one passage 10 to a adjacent passage 10. Typically from 5 to 15% of the surface area of each sheet is occupied by the perforations 12. Each sheet may also be provided with a multiplicity of small parallel ridges 14 extending laterally from one side of the sheet to the other (as shown in Figure 3).

As shown in Figure 4, each sheet has a surface layer 16 of porous metal on both its sides. The porous metal has the same composition as the sheet. Each layer preferably has a thickness in the range of 0.1 mm to 1.0 mm. In an alternative embodiment illustrated in Figure 5, there are a plurality of layers of porous metal on each side of the sheet. Typically, each inner layer 18 has a smaller average pore size then each outer layer 20, although if desired, this difference in the average pore size may be reversed.

One example of the method according to the invention, a sheet such as shown in Figures 1 to 3 and typically of aluminium is provided with a porous aluminium-silicon coating by the following procedure. The surface is first cleaned by shot-blasting. The surface is then plasma sprayed with a proprietory blend of silicon-aluminium alloy and polyester powder (Metco 601 NS). The plasma is formed by supplying to the spraying chamber argon at a pressure of 689.50KPa (100 psig) and hydrogen at a pressure of 344.74 Kpa (50 psig). Spray rates in the range 2.27 Kg(5 pounds) to 3.17 Kg(7 pounds) per hour of the mixture of plastics powder and metal powder are employed. Continuous matrices of aluminium with dispersed particles of polyester are formed on the surface of the aluminium samples. The polyester is then driven off by heating in a vacuum for two hours at a temperature in the order of 540°C. This left surfaces on each sample comprising a network of open re-entrant pores having axes generally disposed at right-angles to the surface of the substrate. If desired, the passages 10 and perforations 12 may be formed after coating.

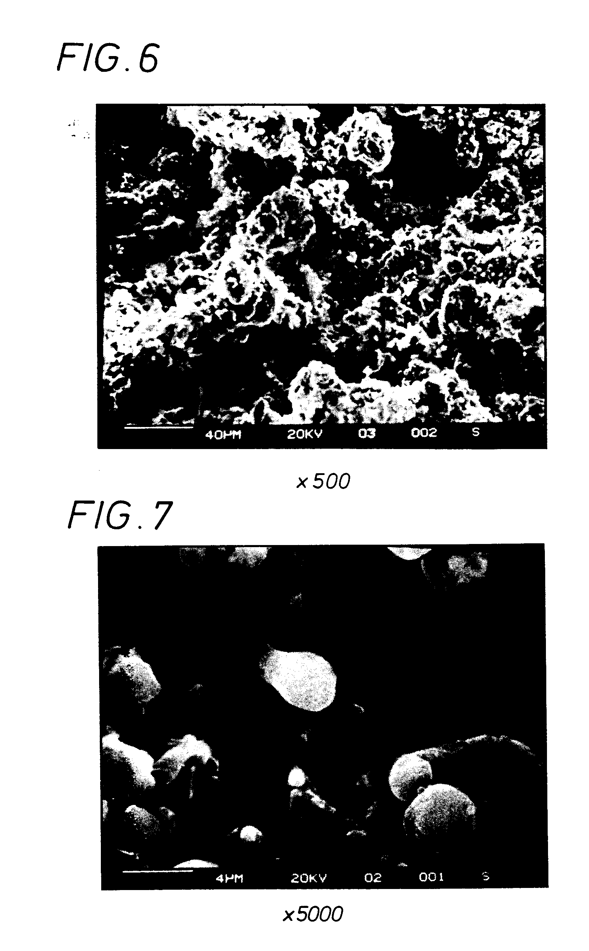

Figures 6 and 7 are electromicrographs of a suitable surface formed by plasma spraying a mixture of 60% by weight of aluminium and 40% by weight of polyester onto an aluminium substrate and then baking the resulting coated substrate for two hours at 500°C. The coating had a thickness of 0.38 mm.

Figure 6 shows the coated surface at a magnification of 500 times actual size, and Figure 7 shows the surface at a magnification of 5000 times actual size.

## Claims

1. A packing for a liquid-vapour contact column, comprising at least one array of liquid-vapour contact members each defining liquid- vapour passages therethrough each having a wettable surface, each member being of metallic sheet and each said wettable surface including a multiplicity of open pores, wherein said surface is formed by spraying a particulate mixture of metal and plastics material onto a surface of the metallic sheet to form a coating comprising particles of plastics embedded in metal on the said surface, and heating the thus formed coating to volatalise or otherwise remove the plastics material and thereby form the pores in the coating.

2. A packing as claimed in Claim 1, in which the said coating has a porosity of from 20% to 50%.

3. A packing as claimed in Claim 1 or Claim 2, in which the average size of the pores is from 15 to 150 micrometres.

4. A packing as claimed in Claim 3, in which the average size of the pores is from 15 to 50 micrometres.

5. A packing as claimed in any one of the preceeding claims, in which each sheet is formed with alternate crests and troughs so as to define the liquid-vapour contact passages.

6. A packing as claimed in Claim 5, in which the sheets are perforated to enable, in use, vapour to pass from each passage to an adjacent one.

7. A packing as claimed in Claim 5 or Claim 6, in which the sheets are arranged such that in alternate sheets the passages slope in different directions.

8. A method of making a packing for a liquid-vapour contact column comprising, spraying a particulate mixture of metal and plastics material onto metallic sheets to form on each sheet at least one coating comprising particles of plastic embedded in metal on the said surface, heating the coating to volatalise or otherwise remove the plastics material and thereby form the pores in the coating, forming liquid-vapour contact passages in the sheets, and forming the sheets into an array in the column.

9. A method as claimed in Claim 8, in which the plastics particles have an average size in the range 15 to 150 micrometres.

10. A method as claimed in Claim 8 or Claim 9, in which the mass ratio of metal particles to plastics particles in the mixture that is sprayed onto the sheets has a value in the range of 4:1 to 1:1.

11. A method as claimed in any one of Claims 8 to 10, in which the mixture of plastics and metal is deposited by plasma spraying or flame spraying.

12. A method as claimed in any one of Claims 8 to 11, in which the plastics particles are of polyester.

## Patentansprüche

1. Packung für eine Flüssigkeits/Dampf-Kontaktsäule, die mindestens eine Anordnung von Flüssigkeits/Dampf-Kontakt gliedern umfaßt, von denen jedes Flüssigkeits/Dampf-Durch lässe mit jeweils einer benetzbaren Oberfläche bestimmt, wobei jedes Glied aus Metallblech besteht und jede benetz bare Oberfläche eine Vielzahl von offenen Poren enthält, die Oberfläche gebildet wird durch Aufsprühen eines Teil chen-Gemischs aus Metall- und Kunststoffmaterial auf eine Oberfläche des Metallblechs, um eine in Metall eingebette te Kunststoffteilchen umfassende Beschichtung an der Ober fläche auszubilden, und durch Ausheizen der so gebildeten Beschichtung, um das Kunststoffmaterial zu verflüchtigen oder auf andere Weise zu entfernen und dadurch die Poren in der Beschichtung auszubilden.

2. Packung nach Anspruch 1, bei der die Beschichtung eine Porosität von 20% bis 50% besitzt.

3. Packung nach Anspruch 1 oder 2, bei der die Durchschnittsgröße der Poren von 15 bis 150 µm beträgt.

4. Packung nach Anspruch 3, bei der die Durchschnittsgröße der Poren von 15 bis 50 µm beträgt.

5. Packung nach einem der vorangehenden Ansprüche, bei der jedes Blech mit einander abwechselnden Gipfeln und Tälern ausgebildet ist, um so die Flüssigkeits/Dampf-Kontaktdurchlässe zu bestimmen

6. Packung nach Anspruch 5, bei der die Bleche perforiert sind, um es im Gebrauch zu ermöglichen, daß Dampf von jedem Durchlaß zu einem benachbarten hindurchtritt.

7. Packung nach Anspruch 5 oder 6, bei der die Bleche so angeordnet sind, daß in aufeinanderfolgenden Blechen die Durchlässe in unterschiedlichen Richtungen geneigt sind.

8. Verfahren zur Herstellung einer Packung für eine Flüssigkeits/Dampf-Kontaktsäule, bei dem ein Teilchengemisch aus Metall- und Kunststoffmaterial auf Metalbleche aufgesprüht wird zur Ausbildung mindestens einer Beschichtung an der Oberfläche, welche in Metall eingebettete Kunststoffteilchen umfaßt, die Beschichtung aufgeheizt wird, um das Kunststoffmaterial zu verflüchtigen oder auf andere Weise zu entfernen und dadurch die Poren in der Beschichtung auszubilden, Flüssigkeits/Dampf-Kontaktdurchlässe in den Blechen gebildet werden und die Bleche zu einer Anordnung in der Säule gebildet werden.

9. Verfahren nach Anspruch 8, bei dem die Kunststoffteilchen eine Durchschnittsgröße im Bereich von 50 bis 150 µm besitzen.

10. Verfahren nach Anspruch 8 oder 9, bei dem das Massenverhältnis der Metallteilchen zu den Kunststoffteilchen in dem auf die Bleche aufgesprühten Gemisch einen Wert im Bereich von 4:1 zu 1:1 besitzt.

11. Verfahren nach einem der Ansprüche 8 bis 10, bei dem das Gemisch aus Kunststoff und Metall durch Plasmasprühen oder Flammsprühen abgeschieden wird.

12. Verfahren nach einem der Ansprüche 8 bis 11, bei dem die Kunststoffteilchen aus Polyester bestehen.

**Revendications**

1. Garnissage pour une colonne de mise en contact liquide-vapeur, ce garnissage comprenant au moins un réseau d'organes de mise en contact liquide-vapeur, dont chacun délimite des passages de liquide-vapeur ayant chacun une surface mouillable, chaque organe étant une feuille métallique et chaque surface mouillable comprenant de multiples pores ouverts, ladite surface étant formée par projection par pulvérisation d'un mélange particulaire de métal et de matière plastique sur une surface de la feuille métallique pour former un revêtement comprenant des particules de la matière plastique enrobée dans du métal sur ladite surface, et le chauffage du revêtement ainsi formé pour volatiliser, ou enlever d'une autre façon, la matière plastique et former ainsi les pores dans le revêtement.

2. Garnissage tel que revendiqué à la revendication 1, dans lequel ledit garnissage présente une porosité de 20 % à 50 %.

3. Garnissage tel que revendiqué à la revendication 1 ou à la revendication 2, dans lequel la taille moyenne des pores se situe entre 15 et 150 μm.

4. Garnissage tel que revendiqué à la revendication 3, dans lequel la taille moyenne des pores se situe entre 15 et 50 μm.

5. Garnissage tel que revendiqué dans l'une quelconque des revendications précédentes, dans lequel chaque feuille est formée avec des crêtes et des creux alternés de façon à définir et délimiter les passages de mise en contact liquide-vapeur.

6. Garnissage tel que revendiqué à la revendication 5, dans lequel les feuilles sont perforées pour permettre à la vapeur de passer, en service, de chaque passage vers un passage adjacent.

7. Garnissage tel que revendiqué à la revendication 5 ou à la revendication 6, dans lequel les feuilles sont disposées de façon que, dans des feuilles alternées, les passages soient inclinés dans des directions différentes.

8. Procédé pour produire un garnissage pour une colonne de mise en contact liquide-vapeur, ce procédé comprenant la projection par pulvérisation d'un mélange particulaire de métal et de matière plastique sur des feuilles métalliques pour former sur chaque feuille, au moins un revêtement comprenant des particules de la matière plastique enrobée dans du métal sur ladite surface, le chauffage du revêtement pour volatiliser ou enlever d'une autre façon la matière plastique et former ainsi les pores dans le revêtement, la formation de passages de mise en contact liquide-vapeur dans les feuilles, et la mise des feuilles en forme de réseau dans la colonne.

9. Procédé selon la revendication 8, dans lequel les particules de la matière plastique ont une taille moyenne comprise entre 15 et 150 μm.

10. Procédé tel que revendiqué à la revendication 8 ou à la revendication 9, dans lequel le rapport massique des particules de métal aux particules de la matière plastique dans le mélange, qui est projeté par pulvérisation sur les feuilles, a une valeur comprise entre 4:1 et 1:1.

11. Procédé tel que revendiqué dans l'une quelconque des revendications 8 à 10, dans lequel le mélange de la matière plastique et du métal est déposé par projection par pulvérisation à l'aide d'un plasma ou par projection par pulvérisation à l'aide d'une flamme.

12. Procédé tel que revendiqué dans l'une quelconque des revendications 8 à 11, dans lequel les particules de la matière plastique sont en du polyester.

FIG.1.

FIG.2.

FIG. 3

8    6    4    14

10

12

12    10

14

FIG. 4    16

2    16

16

FIG. 5    20

18    20

2    20

*FIG.6*

×500

*FIG.7*

×5000